# EUROPEAN PATENT APPLICATION

(11) **EP 2 182 612 A1**
(43) Date of publication of application: **05.05.2010**
(21) Application number: 08018802.2
(22) Date of filing: 28.10.2008
(51) Int. Cl.: H02K 1/20, H02K 9/22

(54) **Arrangement for cooling of an electrical machine**

(71) Applicant: Siemens Aktiengesellschaft, 80333 München (DE)
(72) Inventor: Eriksen, Uffe, 8700 Horsens (DK); Stiesdal, Henrik, 5000 Odense C (DK)

(57) **Abstract**

The invention relates to an arrangement for cooling of an electrical machine, where the electrical machine shows elements (LP) generating heat while the electrical machine is at work. The elements (LP) show at least one fixing-arrangement (FA) to support an element-structure. The fixing-arrangement (FA) is hollow to carry a cooling fluid (CF) which allows a transfer of the heat away from the elements (LP).

## Description

The invention relates to an arrangement for cooling of an electrical machine.

In a preferred embodiment it relates to the cooling of an electrical machine which, is totally enclosed by a shell or housing.

Electrical machines need cooling in order to dissipate the heat, which is generated during operation by ohmic resistance, iron hysteresis, etc.

Small electrical machines may be "surface cooled", but due to the fact that large machines have relatively smaller surfaces per power rating and heat generation, this arrangement will not work for large machines.

When installed under indoor conditions in a normal, dry atmosphere, electrical machines may be not enclosed by a housing, so the cooling can be done by the circulation of ambient air through the machine.

However, when installed under harsh conditions, e.g. as generators in offshore wind-turbines, electrical machines need to be totally enclosed and ambient air may not be allowed to circulate through the machine.

Hence, a dedicated cooling system is required.

One very common method for cooling is the circulation of air or another gaseous medium inside the electrical machine. This air or other gaseous medium is kept cool, for example by use of a heat exchanger.

This cooling method has the disadvantage, that large gas-to-air or gas-to-water heat exchangers are required. Furthermore considerable power is required to circulate the cooling medium.

Another very common cooling method for generators is the circulation of a liquid coolant on a first side of a stator of the generator. This first side is not facing to an air gap, which is between the stator and the rotor.
The stator shows laminate plates, which carries a number of stator-coils, to produce magnetic-fields. The coils are built by metallic-windings. So heat, which is generated at the metallic-windings, is transferred from the metallic-windings through the laminate plates to the cooling medium by conduction.

This cooling method has the disadvantage that it may be difficult to ensure good thermal contact between the stator laminate plates and channels, which are used for the flow of a coolant liquid.

In particular, due to differences in thermal expansion between the stator laminate and the cooling-structure small air gaps may occur between the stator laminate and the coolant channels at certain temperature levels.
Due to the good insulating properties of air such small air gaps are detrimental to the efficiency of the cooling.

Furthermore, the need for substantial cooling structures, such as metallic channels, in addition to the normal structure used to support and maintain geometry and stability of the stator laminate, will typically lead to an increase in liquid cooled machine weight over and above the weight of an air cooled machine.

It is aim of the present invention, to provide an improved cooling arrangement for an electrical machine as described above.

This aim is solved by the features of claim 1.
Advantageous embodiments of the invention are described within the subsequent claims.
The inventive arrangement for cooling consists of an electrical machine, where the electrical machine shows elements (LP), which generates heat while the electrical machine is at work. The elements (LP) show at least one fixing-arrangement (FA) to support an element-structure. The fixing-arrangement (FA) is hollow to carry a cooling fluid (CF) which allows a transfer of the heat away from the elements (LP).

According to the invention is a combined use of fixing-arrangements, so they support a structure on one hand and they are used as coolant-channels on the other hand.

The inventive step lies in the combination of coolant channels and support structure, which ensures both low weight and good thermal contact.

The invention will be described in more detail by help of a figure.

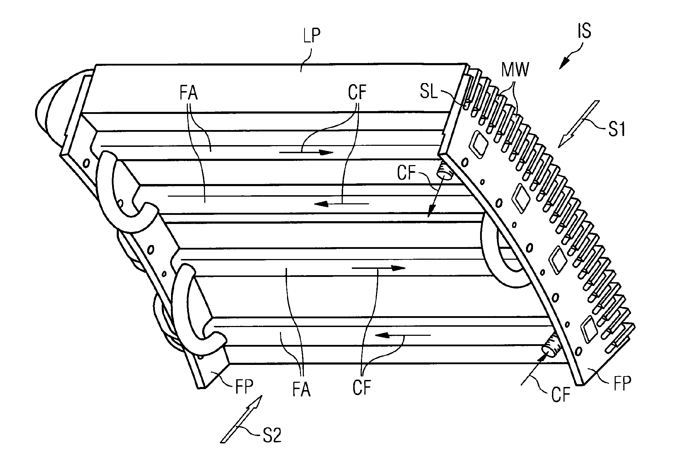

FIG 1 shows the inventive cooling-arrangement for a generator, which is used within an offshore wind-turbine for example.

That kind of generator is normally totally enclosed by a shell or by a housing to avoid the influence of harsh ambient conditions to components of the generator.

The generator in this example shows an inner stator and an outer rotor, while there is a gap with air between them.

The inner stator IS, which is shown here partly, consists of a number of laminate plates LP made of metal.

The laminate plates LP show on a first side S1 a number of slots SL, so the slots SL are forming a number of channels on the first side S1.

Within the slots SL there are metal windings MW, which are used to build electrical coils of the inner stator IS. Shown here is a so called "single-layer winding" with one metal-winding per slot SL.

Next to the metal-windings MW there is the air-gap, while the outer rotor - not shown here - interacts with the metal windings MW of the inner stator IS.

On a second side S2 of the laminate plates LP there are a number of fixing-arrangements FA, which are used to support the structure of the laminate plates LP and of the stator IS, too.

The fixing-arrangement FA are connected, to allow the circulation of a cooling fluid CF, which is brought within the fixing arrangement FA.

In a preferred embodiment water is used as cooling fluid CF, where water may be used together with glycol.

With help of the fixing-arrangements FA generated heat is transferred away from the stator IS, so the connected fixing-arrangements FA are part of a cooling-system.

In a preferred embodiment the heat is transferred to ambient by a cooling fluid CF, where it is cooled by help of a liquid-to-air heat-exchanger.

In a preferred embodiment the fixing-arrangements FA are made of metal pipes. This allows long-term-stability of the cooling-system and of the supported structure.

The laminate plates LP are compressed by finger-plates FP at both ends. These finger-plates FP are fixed to the metal pipes, so they jointly form a support structure, which is integrated with the laminate plates LP.

Cavities of the metal pipes form the coolant-channels. During machine operation the coolant fluid is made to flow through the pipes.

In a preferred embodiment the fixing-arrangements FA are connected by glue or by welding with the laminate plates LP, to avoid tiny air-gaps between the structures, which might influence the heat-transfer from the laminate plates LP to the cooling-system.

This inventive arrangement has the following advantages:
- an efficient cooling can be ensured due to the continuous maintenance of a direct heat transfer contact between coolant channels and the stator laminate plates;
- since the coolant channels doubles as support structure, weight increase relative to an air cooled machine can be avoided; and
- the cooling system can be made more simple, robust and low-cost than other known liquid cooling systems.

## Claims

1. Arrangement for cooling of an electrical machine,
- where the electrical machine shows elements (LP) generating heat while the electrical machine is at work,
- where the elements (LP) show at least one fixing-arrangement (FA) to support an element-structure,
**characterized in,**
- **that** the fixing-arrangement (FA) is hollow to carry a cooling fluid (CF) which allows a transfer of the heat away from the elements (LP).

2. Arrangement according to claim 1, where the cooling fluid (CF) is water.

3. Arrangement according to claim 1 or 2, where the electrical machine is totally enclosed by a shell or by a housing to avoid an influence of harsh ambient conditions to components of the electrical machine.

4. Arrangement according to one of the preceding claims, where a number of fixing-arrangements (FA) are connected, to allow the circulation of the cooling fluid (CF) within the fixing arrangements (FA).

5. Arrangement according to one of the preceding claims, where the fixing-arrangement (FA) is forming part of a cooling-system.

6. Arrangement according to one of the preceding claims, where the fixing-arrangement (FA) is a metal pipe, filled with the cooling fluid (CF).

7. Arrangement according to one of the preceding claims, where the fixing-arrangement (FA) is connected by glue or by welding with the elements (LP).

8. Arrangement according to one of the preceding claims, where the electrical machine is a generator.

9. Arrangement according to one of the preceding claims, where the generator is located within a nacelle of a wind-turbine.

10. Arrangement according to claim 8 or 9,
- where the generator contains a stator (IS), which shows a number of laminate plates (LP),
- where the laminate plates (LP) carries a number of stator coils on a first side (S1) to interact with a rotor of the generator,
- where the laminate plates (LP) generates the heat as elements,
- where the fixing-arrangement (FA) is located at a second side (S2), which is opposite to the first side (S1) wearing the stator coils.
